# EUROPEAN PATENT APPLICATION

(11) **EP 4 478 221 A1**
(43) Date of publication of application: **18.12.2024**
(21) Application number: 23179444.7
(22) Date of filing: 15.06.2023
(51) Int. Cl.: G06F 21/10, H04L 9/40, H04L 9/32

(54) **METHOD FOR SECURING THE ACCESS TO A CONTENT, CORRESPONDING COMPUTER PROGRAM PRODUCT AND DEVICES**

(71) Applicant: Nagravision Sarl, 1033 Cheseaux-sur-Lausanne (CH)
(72) Inventor: BIEBER, Yann, 1033 CHESEAUX-SUR-LAUSANNE (CH)
(74) Representative: Ipside

(57) **Abstract**

A method is proposed for securing the access to a content delivered by a content provider system (110) to a receiving device (100) through a communications network, the content being associated to at least one access condition. According to such method, the receiving device executes:
- obtaining (S200) a verifiable presentation request, the verifiable presentation being representative of at least one verifiable credential attribute corresponding to a respective access condition associated to the content;
- providing (S210) the verifiable presentation request to a digital wallet (130) comprising the at least one verifiable credential attribute; and
- obtaining (S230) an access information representative of the right of accessing the content when the at least one verifiable credential attribute comply with the at least one access condition.

## Description

### 1. FIELD OF THE DISCLOSURE

The field of the disclosure is that of the delivery of content, e.g. a video content, an audio content, a multimedia content, etc.

More specifically, the disclosure relates to a method for controlling the access to such content delivered by a content provider system to a receiving device when the content is associated to one (or more) access condition.

The disclosure can be of interest in any field wherein such control of the access to a given content occurs. This is the case for instance in the field of broadcasting or in the field of the delivery of content to applications running in an environment in communication with the internet (web-applications).

### 2. TECHNOLOGICAL BACKGROUND

Operators or websites are currently in charge of distributing content (e.g. multimedia content) or made available to users by means of receiving devices able to handle multimedia contents. Each user can have several receiving devices such as smartphones, tablets, laptops or TV receiving devices for example.

Recently in the news, several countries started pushing websites to prevent children to access their contents or website. For example, depending on the country, social media platforms like e.g. Instagram, TikTok or Snapchat are not authorized to accept new user younger than 13 or 15 years old. In addition, pornographic websites are required to block access to user younger than 18 years old. In both cases, the websites simply ask the user for their birthdate and trust the answer, it is obviously not a valid solution.

Several solutions have been proposed involving credit cards, face recognition, mobile number, full user Know Your Customer (KYC) solutions which creates additional issues with user privacy.

On the media content consumption side, broadcast or Over-The-Top (OTT) platforms usually simply rely on a Personal Identification Number (PIN) code if they implement any control to block children from accessing adult contents. In addition to that, all OTT media streaming services are facing excessive account sharing: a person subscribes to the service and then shares his credentials (e.g. email and passwords) with friends and family.

There is thus a need for a solution for controlling the access to a content which does not create issues on privacy and prevents from account sharing attacks.

### 3. SUMMARY

A particular aspect of the present disclosure relates to a method for securing the access to a content delivered by a content provider system to a receiving device through a communications network, the content being associated to at least one access condition. According to such method, the receiving device executes:
- obtaining a verifiable presentation request, the verifiable presentation being representative of at least one verifiable credential attribute corresponding to a respective access condition associated to the content;
- providing the verifiable presentation request to a digital wallet comprising the at least one verifiable credential attribute; and
- obtaining an access information representative of the right of accessing the content when the at least one verifiable credential attribute comply with the at least one access condition.

Thus, the present disclosure proposes a new and inventive solution for controlling the access to a content delivered by a content provider system (e.g. by a server of the content provider system through an IP protocol communication, or through a broadcast network communication (i.e. a unidirectional communication)) to a receiving device (e.g. a smartphone, a set top box, a computer, a TV receiving device (e.g. an HbbTV).

More particularly, the use of verifiable credentials (e.g. in the meaning of the World Wide Web Consortium (W3C)) for controlling the right to access the content does not create any issue with privacy. Furthermore, such verifiable credentials being uniquely associated to a given user, the present technique prevents account sharing attacks.

In some embodiments, the obtaining the verifiable presentation request comprises receiving, from the content provider system, the verifiable presentation request.

For instance, the verifiable presentation request comprises an identifier of the content provider system (e.g. an Uniform Resource Locator (URL) of a server of the content provider system) for allowing the receiving device to send back the verifiable presentation to the content provider system. This allows the content provider system executing the comparison between the access condition(s) and the verifiable credential attribute(s).

In some embodiments, the obtaining the access information comprises: receiving, from the content provider system, the access information.

For instance, the access information is a content URL and/or a content CDN access token.

In some embodiments, the access information comprises an identifier of a distant server able to deliver the content. The receiving device executes, responsive to the obtaining the access information, retrieving and rendering the content from the distant server identified in the access information.

In some embodiments, the obtaining the verifiable presentation request comprises:
- receiving, from the content provider system, a verifiable presentation request template; and
- supplementing the verifiable presentation request template at least with an identification information identifying the receiving device, delivering the verifiable presentation request.

For instance, the identification information is an URL. This allows the receiving device receiving back the verifiable presentation and thus executing the comparison between the access condition(s) and the verifiable credential attribute(s). The content is delivered by the content provider system to the receiving device through e.g. a broadcast network communication and the verifiable presentation request template is part of the metadata broadcasted with the content.

In some embodiments, the receiving device executes: obtaining, from the digital wallet, the verifiable presentation.

The obtaining the access information comprises:
- receiving, from the content provider system, the at least one access condition; and
- comparing the at least one access condition and the at least one verifiable credential attribute delivering the access information when the at least one verifiable credential attribute comply with the at least one access condition.

In some embodiments, the receiving device executes, responsive to the obtaining the access information, the rendering of the content.

In some embodiments, the providing the verifiable presentation request comprises generating and displaying a graphical item representative of the verifiable presentation request.

For instance, the graphical item is a Quick Response, or QR, code type, a Just-Another-Bar, or JAB, code type or a textual representation. The digital wallet is e.g. implemented in a smartphone that scans the graphical item to obtain the verifiable presentation request.

According to another aspect of the present method for securing the access to a content delivered by a content provider system to a receiving device through a communications network, the content being associated to at least one access condition, the content provider system executes:
- sending, to the receiving device, a verifiable presentation request, the verifiable presentation being representative of at least one verifiable credential attribute corresponding to a respective access condition associated to the content;
- receiving, from the digital wallet, the verifiable presentation;
- comparing the at least one access condition and the at least one verifiable credential attribute delivering a comparison result; and
- sending, to the receiving device, an access information representative of the right of accessing the content when the comparison result is representative of the compliance of the at least one verifiable credential attribute with the at least one access condition.

For instance, the access information is a content URL and/or a content CDN access token.

According to another aspect of the present method for securing the access to a content delivered by a content provider system to a receiving device through a communications network, the content being associated to at least one access condition, the content provider system executes:
- sending, to the receiving device, a verifiable presentation request template, the verifiable presentation being representative of at least one verifiable credential attribute corresponding to a respective access condition associated to the content.

Thus, the receiving device is able to construct, based on the received template, the verifiable presentation request for requesting the verifiable credential attribute(s) to be compared with the access condition(s). For instance, the content is delivered by the content provider system to the receiving device through a broadcast network communication and the verifiable presentation request template is part of the metadata broadcasted with the content.

Another aspect of the present disclosure relates to a computer program product comprising program code instructions for implementing the above-mentioned method for securing the access to a content (in any of the different embodiments discussed above), when the program is executed on a computer or a processor.

Another aspect of the present disclosure relates to a first electronic device comprising means configured for executing all or part of the steps of the above-mentioned method for securing the access to a content as executed by the receiving device (in any of the different embodiments discussed above). Thus, the features and advantages of this first device are the same as those of the corresponding steps of said method. Therefore, they are not detailed any further.

Another aspect of the present disclosure relates to a second electronic device comprising means configured for executing all or part of the steps of the above-mentioned method for securing the access to a content as executed by the content provider system (in any of the different embodiments discussed above). Thus, the features and advantages of this second device are the same as those of the corresponding steps of said method. Therefore, they are not detailed any further.

Another aspect of the present disclosure relates to a receiving device comprising a first electronic device as discussed above (in any of the different embodiments discussed above).

Another aspect of the present disclosure relates to a server comprising a second electronic device as discussed above (in any of the different embodiments discussed above).

### 4. LIST OF FIGURES

Other features and advantages of embodiments shall appear from the following description, given by way of indicative and non-exhaustive examples and from the appended drawings, of which:
- Figure 1 illustrates a receiving device communicatively connected to a content provider system through a first communications network, a smartphone being communicatively connected to the receiving device through a second communications network;
- Figure 2 illustrates a flowchart of a method for securing the access to a content delivered by the content provider system to the receiving device of Figure 1 according to one embodiment of the present disclosure;
- Figure 2a illustrates a flowchart of the method for securing the access to a content delivered by the content provider system to the receiving device of Figure 1 according to another embodiment of the present disclosure;
- Figure 3 illustrates an example of the structural blocks of an electronic device allowing steps of the method of Figure 2 or of Figure 2a to be executed by the receiving device of Figure 1 according to one embodiment of the present disclosure;
- Figure 4 illustrates an example of the structural blocks of an electronic device allowing steps of the method of Figure 2 or of Figure 2a to be executed by the content provider system of Figure 1 according to one embodiment of the present disclosure.

### 5. DETAILED DESCRIPTION

In all figures of the present document, the same numerical reference signs designate similar elements and steps.

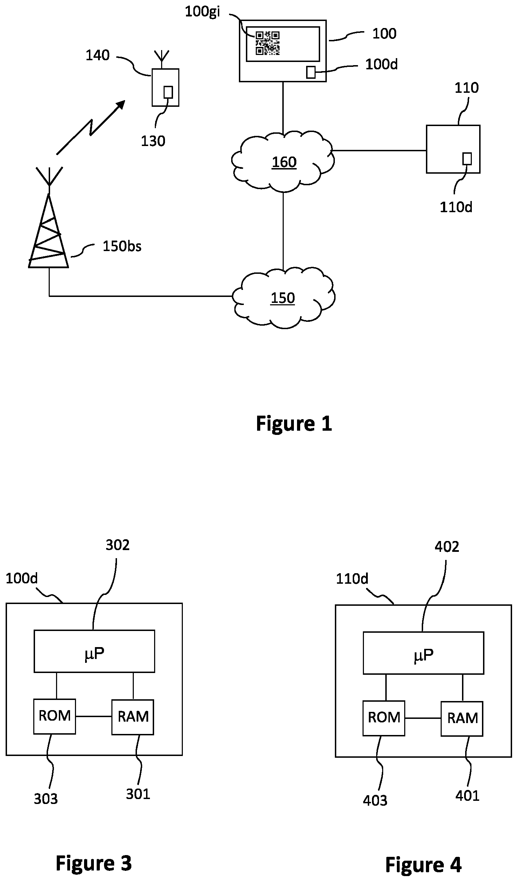

Referring now to **Figure 1****,** we illustrate a receiving device 100 communicatively connected to a content provider system 110 through a first communications network 160. For instance, the first communications network 160 is a bidirectional communications network, e.g. of a xDSL type, implementing an internet protocol. Such network is of a wired type in the present embodiment. However, in other embodiments, the first communications network 160 implements a wireless communications technology, e.g. based on a cellular protocol (e.g. a 3GPP 2G, 3G, 4G or 5G protocol), on a WIFI protocol or on a WiMAX protocol. In such configuration wherein the first communications network 160 is a bidirectional communications network, the content provider system 110 provides contents to the receiving device 100 (e.g. a smartphone, a set top box, a computer, a tablet) e.g. through an over-the-top (OTT) service. For instance, the receiving device 100 runs a streaming application for rendering the contents received from the content provider system 110.

Alternatively, in other embodiments, the first communications network 160 is a unidirectional communications network. In such embodiments, the content provider system 110 provides contents to the receiving device 100 (e.g. a set top box, a TV receiving device (e.g. an HbbTV) e.g. through a broadcast service.

However, whatever the nature of the first communications network 160 (e.g. bidirectional or unidirectional), and thus the nature of the service provided by the content provider system 110 (e.g. of the OTT type or of the broadcast type), the content delivered by the content provider system 110 may be associated to one (or more) access condition. Such access condition is e.g. linked to the age of the user of the receiving device 100 that would be allowed to access to the content.

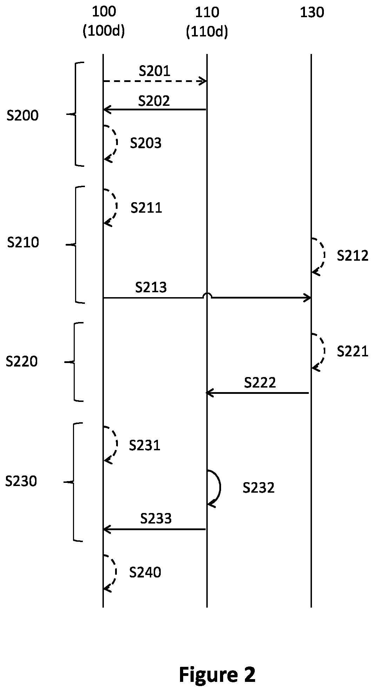

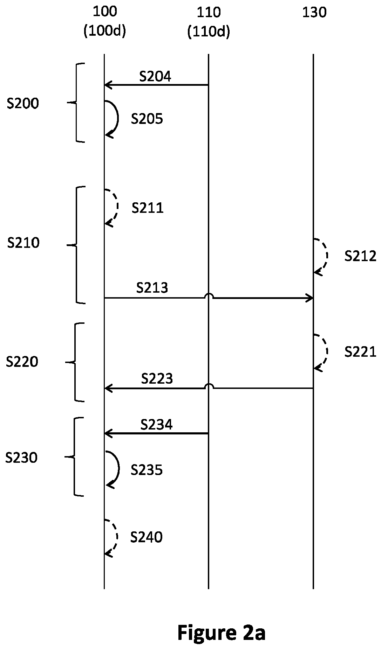

In order to ensure that such user is effectively allowed to access to the content, the receiving device 100 comprises an electronic device 100d that executes all or part of the steps of the method for securing the access to a content in the various embodiments disclosed below in relationship with Figure 2 and Figure 2a. For that, the electronic device 100d comprises means detailed below in relation with Figure 3.

Back to Figure 1, in order to ensure that the user is effectively allowed to access the content, the content provider system 110 comprises an electronic device 110d that executes all or part of the steps of the method for securing the access to a content in the various embodiments disclosed below in relationship with Figure 2 and Figure 2a. For that, the electronic device 110d comprises means detailed below in relation with Figure 4.

Back to Figure 1, in order to execute the method for securing the access to a content as disclosed below in relationship with Figure 2 and Figure 2a, a digital wallet 130 comprise verifiable credentials (e.g. in the meaning of the W3C) associated to the user of the receiving device 100. In the present embodiment, the digital wallet 130 is implemented into a smartphone 140. The smartphone 140 is communicatively connected to the receiving device 100 through a second communications network 150. In the present embodiment, the second communications network 150 is a wireless communications network (e.g. based on a cellular protocol (e.g. a 3GPP 2G, 3G, 4G or 5G protocol), on a WIFI protocol or on a WiMAX protocol) comprising the base station 150bs. However, in other embodiments, the second communications network 150 implements a wired communications link, e.g. a xDSL communications link implementing an internet protocol. The second communications network 150 is interconnected with the first communications network 160 so that the smartphone 140 is able to provide to the receiving device 100, upon request, one (or more) verifiable credential attribute implemented in the digital wallet 130 in the form of a verifiable presentation. More particularly, in the present embodiment, the receiving device 100 requests the one (or more) verifiable credential attribute through a verifiable presentation request that is encoded into a graphical item 100gi (e.g. a QR code, a JAB or a textual representation) representative of the verifiable presentation request. As detailed below in relation with Figure 2 and Figure 2a, the smartphone 140 scans the graphical item 100gi to obtain the verifiable presentation request.

In some embodiments, the second communications network 150 and the first communications network 160 are a same network.

In some embodiments, the digital wallet 130 is implemented directly in the receiving device 100 and not in a distinct smartphone 140.

Referring now to **Figure 2****,** we describe the steps of a method for securing the access to a content delivered by the content provider system 110 to the receiving device 100, the content being associated to one (or more) access condition, according to one embodiment of the present disclosure.

For instance, the embodiment of Figure 2 is suited to the configuration discussed in relation with Figure 1 wherein the first communications network 160 is a bidirectional communications network and wherein the content provider system 110 provides the content to the receiving device 100 e.g. through an OTT service.

In a **step S200,** the receiving device 100 obtains a verifiable presentation request. The verifiable presentation is representative of at least one verifiable credential attribute corresponding to a respective access condition associated to the content.

More particularly, the step S200 comprises:
- a **step S201** wherein the receiving device 100 sends, to the content provider system 110, a request for a catalogue of contents. Conversely, during the step S201, the content provider system 110 receives, from the receiving device 100, the request for a catalogue of contents;
- a **step S202** wherein the content provider system 110 sends, to the receiving device 100, the catalogue of contents. In addition to the catalogue of contents, the content provider system 110 sends, to the receiving device 100 and for at least one content listed in the catalogue, a verifiable presentation request. The verifiable presentation is representative of at least one verifiable credential attribute corresponding to a respective access condition associated to the content. Furthermore, the verifiable presentation request comprises an identifier of the content provider system 110 (e.g. an URL of a server of the content provider system 110) for allowing the receiving device 100 to send back the verifiable presentation to the content provider system 110 as discussed below in relation with step S230. Conversely, during the step S202, the receiving device 100 receives, from the content provider system 110, the catalogue of contents and the associated verifiable presentation request(s); and
- a **step S203** wherein the content to be obtained from the content provider system 110 is selected. For instance, the selection is performed by a user of the receiving device 100.

However, in other embodiments, the step S201 is not necessarily executed, e.g. when the receiving device receives by default the catalogue and the associated verifiable presentation request(s). In the same way, a catalogue is not necessarily received in step S202, e.g. when only one content is available at the content provider system 110. In such case, the step S203 is not necessarily executed as there is no selection to be performed. In such case, the subsequent steps of the method thus apply to the content to be obtained by default.

Back to Figure 2, in a **step S210,** the receiving device 100 provides the verifiable presentation request corresponding to the content selected during step S203 (or to the content to be obtained by default depending on the embodiment for step S200) to a digital wallet 130. The digital wallet 130 comprises the at least one verifiable credential attribute the verifiable presentation is representative of.

For instance, referring to the configuration of Figure 1, the step S210 comprises:
- a **step S211** wherein the receiving device 100 requests a digital wallet 130 connection. For instance, the receiving device 100 displays an information for having the user to be informed that a digital wallet 130 connection is required;
- a **step S212** wherein the digital wallet 130 connection is accepted. for instance, the user performs an action with the smartphone 140 (e.g. enters personal credentials) for having the digital wallet 130 to be waked-up or run; and
- a **step S213** wherein the receiving device 100 generates and displays (e.g. on a screen of the receiving device 100) a graphical item 100gi (e.g. a QR code, a JAB or a textual representation) representative of the verifiable presentation request. Conversely, during step S213, the smartphone 140 scans the graphical item 100gi and obtains the verifiable presentation request. The smartphone 140 provides the verifiable presentation request to the digital wallet 130.

However, in some embodiments the steps S111, S212 are not necessarily executed, e.g. when the digital wallet 130 is already waked-up or run.

In some embodiments discussed above in relation with Figure 1 wherein the digital wallet 130 is implemented in the receiving device 100, during the step S213, the receiving device 100 provides the verifiable presentation request to the digital wallet 130 implemented in the receiving device 100.

Back to Figure 2, in a **step S220,** the verifiable presentation is obtained. More particularly, the step S220 comprises:
- a **step S221** wherein the user reviews the at least one verifiable credential attribute of the verifiable presentation obtained from the digital wallet 130. For instance, the smartphone 140 displays (e.g. on a touch screen of the smartphone 140) the at least one verifiable credential attribute for having the user to review the at least one verifiable credential attribute; and
- a **step S222** wherein, if the user agrees with the sharing of the at least one verifiable credential attribute reviewed during the step S221 (e.g. through a pressing on the touch screen of the smartphone 140 for validating the sharing of the reviewed at least one verifiable credential attribute), the sending, by the smartphone 140 implementing the digital wallet 130, to the content provider system 110, of the verifiable presentation. Conversely, during step S222, the content provider system 110 receives the verifiable presentation sent by the digital wallet 130.

Back to Figure 2, in a **step S230,** the receiving device 100 obtains an access information representative of the right of accessing the content selected during step S203 (or to the content to be obtained by default depending on the embodiment for step S200) when the at least one verifiable credential attribute comply with the at least one access condition.

More particularly, the step S230 comprises:
- a **step S231** wherein the receiving device 100 performs an asynchronous wait for waiting that the content provider system 110 receives the presentation from the smartphone 140 implementing the digital wallet 130. sends, to the content provider system 110, the verifiable presentation received during step S220. Conversely, during the step S231, the content provider system 110 receives, from the receiving device 100, the verifiable presentation;
- a **step S232** wherein the content provider system 110 compares the at least one access condition and the at least one verifiable credential attribute comprised in the verifiable presentation. The execution of the step S232 delivers a comparison result; and
- a **step S233** wherein the content provider system 110 sends, to the receiving device 100, an access information representative of the right of accessing the content when the comparison result is representative of the compliance of the at least one verifiable credential attribute with the at least one access condition. Conversely, when the comparison result is representative of the compliance of the at least one verifiable credential attribute with the at least one access condition, during the step S231 the receiving device 100 receives, from the content provider system 110, the access information. For instance, the access information is a content URL and/or a content CDN access token for accessing the content selected during step S203 (or the content to be obtained by default depending on the embodiment for step S200).

In some embodiments discussed above in relation with Figure 1 wherein the digital wallet 130 is implemented in the receiving device 100, the step S213 is not necessarily executed. Conversely:
- during the step S221 wherein the user reviews the at least one verifiable credential attribute of the verifiable presentation obtained from the digital wallet 130, the receiving device 100 e.g. displays the at least one verifiable credential attribute for having the user to review the at least one verifiable credential attribute; and
- during the step S222, if the user agrees with the sharing of the at least one verifiable credential attribute reviewed during the step S221 (e.g. through a pressing on a remote control of the receiving device 100 for validating the sharing of the reviewed at least one verifiable credential attribute), the receiving device 100 implementing the digital wallet 130 sends the verifiable presentation to the content provider system 110.

In such embodiments, the step S231 is not necessarily implemented.

In some embodiments, the step S221 is not executed. For instance, the digital wallet 130 (in the smartphone 140 or in the receiving device 100) sends the verifiable presentation to the content provider system 110 during step S222 upon reception of the verifiable presentation request, i.e. without any action by the user. This is the case for instance when the user previously approved the automatic sharing of the verifiable credential attributes.

Back to Figure 2, in a **step S240,** the receiving device 100 retrieves and/or renders the content responsive to the obtaining the access information.

Referring now to **Figure 2a****,** we describe the steps of the method for securing the access to a content delivered by the content provider system 110 to the receiving device 100 according to another embodiment of the present disclosure.

For instance, the embodiment of Figure 2a is suited to the configuration discussed in relation with Figure 1 wherein the first communications network 160 is a unidirectional communications network and wherein the content provider system 110 provides the content to the receiving device 100 e.g. through a broadcast service.

Compared to the embodiments discussed above in relation with Figure 2, the embodiment of Figure 2a comprises alternative implementations for the steps S200, S220 and 5230. The steps S200, S220 and S230 according to the present embodiment can be combined with the other steps S210 and S240 of the method for securing the access to a content as described above in relation with Figure 2 (in any of the embodiments described above in relation with Figure 2).

More particularly, the **step S200** according to the embodiment of Figure 2a comprises:
- a **step S204** wherein the content provider system 110 sends, to the receiving device 100, a verifiable presentation request template. More particularly, such template needs to be supplemented at least with an identification information identifying the device requesting the verifiable presentation for delivering a valid verifiable presentation request. The verifiable presentation object of the request is representative of at least one verifiable credential attribute corresponding to a respective access condition associated to the content (e.g. the content selected during step S203 or the content to be obtained by default depending on the embodiment for step S200 as discussed above in relation with Figure 2). Conversely, during the step S204, the receiving device 100 receives, from the content provider system 110, the verifiable presentation request template. For instance, the verifiable presentation request template is part of metadata broadcasted with the content by the content provider system 110; and
- a **step S205** wherein the receiving device 100 supplements the verifiable presentation request template at least with an identification information identifying the receiving device 100. The step S205 delivers the verifiable presentation request. For instance, the identification information is an URL identifying the receiving device 100. Thus, the receiving device 100 is able to construct, based on the received template, the verifiable presentation request for requesting the at least one verifiable credential attribute to be compared with the at least one access condition. This allows the receiving device 100 receiving back the verifiable presentation and thus executing the comparison between the at least one access condition and the at least one verifiable credential attribute during the step 5230.

More particularly, the **step S220** according to the embodiment of Figure 2a comprises the step S221 as described above in relation with Figure 2 (in any of the embodiments described above in relation with Figure 2). However, during a step S223, the receiving device 100 obtains the verifiable presentation from the digital wallet 130. For instance, the receiving device 100 receives the verifiable presentation sent by the smartphone 140 implementing the digital wallet 130. Alternatively, when the digital wallet 130 is implemented in the receiving device 100, the receiving device 100 obtains directly the verifiable presentation from the digital wallet 130 implemented in the receiving device 100.

In some embodiments, the step S221 is not executed. For instance, the receiving device 100 obtains the verifiable presentation from the digital wallet 130 during step S223 upon reception of the verifiable presentation request, i.e. without any action by the user. This is the case for instance when the user previously approved the automatic sharing of the verifiable credential attributes.

Back to Figure 2a, the **step S230** comprises:
- a **step S234** wherein the content provider system 110 sends, to the receiving device 100, the at least one access condition. Conversely, during step S234, the receiving device 100 receives, from the content provider system 110, the at least one access condition. For instance, the at least one access condition is part of metadata broadcasted with the content by the content provider system 110; and
- a **step S235** wherein the receiving device 100 compares the at least one access condition and the at least one verifiable credential attribute delivering the access information when the at least one verifiable credential attribute comply with the at least one access condition.

Whatever, the considered embodiment, the use of verifiable credentials (e.g. in the meaning of the W3C) for controlling the right of accessing to the content does not create any issue on privacy. Furthermore, such verifiable credentials being uniquely associated to a given user, the present technic prevents from account sharing attacks.

Referring now to **Figure 3****,** in order to be able to implement the corresponding steps of the method for securing the access to a content in the various embodiments disclosed above in relationship with Figure 2 and Figure 2a, in some embodiments the electronic device 100d comprises:
- a non-volatile memory 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described above (method for securing the access to a content) in the various embodiments disclosed above in relationship with Figure 2 and Figure 2a.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for securing the access to a content may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the electronic device 100d is implemented in the receiving device 100, e.g. in the form of a secure element.

Referring now to **Figure 4****,** in order to be able to implement the corresponding steps of the method for securing the access to a content in the various embodiments disclosed above in relationship with Figure 2 and Figure 2a, in some embodiments the electronic device 110d comprises:
- a non-volatile memory 403 (e.g. a read-only memory (ROM), a hard disk, a flash memory, etc.);
- a volatile memory 401 (e.g. a random-access memory or RAM) and a processor 402.

The non-volatile memory 403 is a non-transitory computer-readable carrier medium. It stores executable program code instructions, which are executed by the processor 402 in order to enable implementation of some steps of the method described above (method for securing the access to a content) in the various embodiments disclosed above in relationship with Figure 2 and Figure 2a.

Upon initialization, the aforementioned program code instructions are transferred from the non-volatile memory 403 to the volatile memory 401 so as to be executed by the processor 402. The volatile memory 401 likewise includes registers for storing the variables and parameters required for this execution.

The steps of the method for securing the access to a content may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the electronic device 110d is implemented in the content provider system 110, e.g. as a dedicated frontend service.

## Claims

1. Method for securing the access to a content delivered by a content provider system (110) to a receiving device (100) through a communications network (160), the content being associated to at least one access condition,
**characterized in that** the **receiving device** executes:
- obtaining (S200) a verifiable presentation request, the verifiable presentation being representative of at least one verifiable credential attribute corresponding to a respective access condition associated to the content;
- providing (S210) the verifiable presentation request to a digital wallet (130) comprising the at least one verifiable credential attribute; and
- obtaining (S230) an access information representative of the right of accessing the content when the at least one verifiable credential attribute comply with the at least one access condition.

2. Method according to claim 1, wherein the obtaining (S200) the verifiable presentation request comprises receiving (S202), from the content provider system, the verifiable presentation request.

3. Method according to claim 1 or 2, wherein the obtaining (S230) the access information comprises:
- receiving (S233), from the content provider system, the access information.

4. Method according to claim 1, wherein the obtaining (S200) the verifiable presentation request comprises:
- receiving (S204), from the content provider system, a verifiable presentation request template; and
- supplementing (S205) the verifiable presentation request template at least with an identification information identifying the receiving device, delivering the verifiable presentation request.

5. Method according to claim 1 or 4, wherein the receiving device executes:
- obtaining (S223), from the digital wallet, the verifiable presentation; and wherein the obtaining (S230) the access information comprises:
- receiving (S234), from the content provider system, the at least one access condition; and
- comparing (S235) the at least one access condition and the at least one verifiable credential attribute delivering the access information when the at least one verifiable credential attribute comply with the at least one access condition.

6. Method according to any of the claims 1 to 5, wherein the providing (S210) the verifiable presentation request comprises generating and displaying (S213) a graphical item (100gi) representative of said verifiable presentation request.

7. Method for securing the access to a content delivered by a content provider system (110) to a receiving device (100) through a communications network (160), the content being associated to at least one access condition,
**characterized in that** the **content provider system** executes:
- sending (S202), to the receiving device, a verifiable presentation request, the verifiable presentation being representative of at least one verifiable credential attribute corresponding to a respective access condition associated to the content;
- receiving (S222), from the digital wallet, the verifiable presentation;
- comparing (S232) the at least one access condition and the at least one verifiable credential attribute delivering a comparison result; and
- sending (S233), to the receiving device, an access information representative of the right of accessing the content when the comparison result is representative of the compliance of the at least one verifiable credential attribute with the at least one access condition.

8. Method for securing the access to a content delivered by a content provider system (110) to a receiving device (100) through a communications network (160), the content being associated to at least one access condition,
**characterized in that** the **content provider system** executes:
- sending (S204), to the receiving device, a verifiable presentation request template, the verifiable presentation being representative of at least one verifiable credential attribute corresponding to a respective access condition associated to the content.

9. Computer program product comprising program code instructions for implementing a method according to at least one of the claims 1 to 8, when said program is executed on a computer or a processor.

10. Device (100d) for securing the access to a content delivered by a content provider system (110) to a receiving device (100) through a communications network (160), the content being associated to at least one access condition,
**characterized in that** it comprises a processor (302) or a dedicated computing machine configured for, when implemented in the receiving device:
- obtaining (S200) a verifiable presentation request, the verifiable presentation being representative of at least one verifiable credential attribute corresponding to a respective access condition associated to the content;
- providing (S210) the verifiable presentation request to a digital wallet (130) comprising the at least one verifiable credential attribute; and
- obtaining (S230) an access information representative of the right of accessing the content when the at least one verifiable credential attribute comply with the at least one access condition.

11. Device (110d) for securing the access to a content delivered by a content provider system (110) to a receiving device (100) through a communications network (160), the content being associated to at least one access condition,
**characterized in that** it comprises a processor (402) or a dedicated computing machine configured for, when implemented in the content provider system:
- sending (S202), to the receiving device, a verifiable presentation request, the verifiable presentation being representative of at least one verifiable credential attribute corresponding to a respective access condition associated to the content;
- receiving (S222), from the digital wallet, the verifiable presentation;
- comparing (S232) the at least one access condition and the at least one verifiable credential attribute delivering a comparison result; and
- sending (S233), to the receiving device, an access information representative of the right of accessing the content when the comparison result is representative of the compliance of the at least one verifiable credential attribute with the at least one access condition.

12. Device (110d) for securing the access to a content delivered by a content provider system (110) to a receiving device (100) through a communications network (160), the content being associated to at least one access condition,
**characterized in that** it comprises a processor (402) or a dedicated computing machine configured for, when implemented in the content provider system:
- sending (S204), to the receiving device, a verifiable presentation request template, the verifiable presentation being representative of at least one verifiable credential attribute corresponding to a respective access condition associated to the content.

13. Receiving device (100) comprising a device (100d) according to claim 10.

14. Server (110) comprising a device (110d) according to claim 11 or 12.
